# EUROPEAN PATENT APPLICATION

(11) **EP 1 974 616 A1**
(43) Date of publication of application: **01.10.2008**
(21) Application number: 07425188.5
(22) Date of filing: 30.03.2007
(51) Int. Cl.: A23K 1/14, A23L 1/18

(54) **Rice product based on immature grain and/or damaged parboiled rice and/or broken parboiled rice and process for making the same**

(71) Applicant: R.I.S.A. Srl., 12057 Neive (CN) (IT)
(72) Inventor: Schiappapietra, Luigi, 12052 Neive (CN) (IT)
(74) Representative: Perani, Aurelio

(57) **Abstract**

The invention relates to a process for making a rice-based food product comprising the steps of a) selecting a raw material selected from the group consisting of immature grain, damaged parboiled rice, broken parboiled rice and mixtures thereof, b) dry and/or vacuum cooking-toasting the raw material thus selected; c) puffing the products so pre-treated. Preferably, before the cooking-toasting step b), the process according to the invention includes the steps of: a1) conditioning the selected raw material; a2) stabilizing the selected and conditioned raw material and a3) whitening the treated raw material. The rice-based food product of the invention is intended for use as animal and human feeding.

## Description

The present invention relates to a novel rice-based food product and a process for making the same. Particularly, the present food product is intended for both human and animal use.

For the production of puffed rice or still rice-based preparations, usually as raw material, the polished rice kernels both whole and broken are used, the latter being also known as "Corpetto broken rice" "Corpettone broken rice", "Mezzagrana broken rice" depending on grain sizes.

Particularly, the polished rice kernel obtained after polishing process shows characteristics that make it the only suitable raw material for use in the production of rice preparations, particularly for obtaining puffed rice. In fact for the puffed rice production, round-grained polished kernels, both whole and broken, are generally selected, which are firstly heated to 100-130°C and subsequently introduced in an autoclave, wherein superheated steam is conveyed. Therefore, the kernels so treated are subjected to a very high pressure treatment, which causes the transformation of the kernels, by shape and consistency, into puffed rice.

The preparation of rice-based products and specifically puffed rice-based products does not provide for using raw materials other than polished rice both whole and broken, neither in zootechnical field due to their characterizing strong taste, nor in human food field due to their evident and disadvantageous aesthetic properties. As a matter of fact, such characteristics do not allow to obtain a marketable rice-based product or even a puffed rice.

Amongst by-products of the rice grain processing for obtaining polished rice kernels, *immature grain* and *damaged parboiled rice* and *broken parboiled rice* are known.

Specifically, the *immature grain* consists of fine and unripe rice seeds which are not subjected to the hulling action of the hullers and the polishing machines for obtaining the polished rice. Clearly at the end of industrial processing of the rice grains, the so-called immature grain is therefore still wrapped in their pericarp, which coats the aleuronic layer of the raw rice grain, as occurs in the case of hulled rice or brown rice. Besides an unpleasant aesthetic appearance, the immature grain further has a markedly strong taste, whereby it is considered to be a waste product of the polished rice production. Notwithstanding its negative aesthetic and taste characteristics, however the immature grain has a clear biological and nutritional supremacy over commercial polished rice, while keeping practically intact the vitamin and mineral content of the cortical layer of the caryopsis. Particularly, the immature grain is rich in vitamins B1 and B2, nicotinamide, pantothenic acid and choline, which on the contrary are not present in polished rice, and which are fundamental elements in the metabolic processes and in the prevention of several diseases.

The *damaged parboiled rice* consists of the rice seeds discarded after parboiling, i.e. the pressure treatment of chaff-coated rice under heat and moisture conditions in order to facilitate the migration of water-soluble components from the inside, which is carried out for parboiled rice production. Damaged parboiled rice is in fact discarded in parboiled rice production, by using optical separators, owing to its colour defects. It may be stained, amber-coloured, but particularly it may form the "peck", i.e. the whole of kernels that are wholly or partly browned by the heat raised during the processing.

*Broken parboiled rice* is also derived from parboiled rice production and consists of the kernels that are broken during the different steps of processing.

Due to their physical appearance characteristics, the *damaged parboiled rice* and the *broken parboiled rice* are considered low-cost by-products of low commercial value, not even useful for the production of rice flours, although they are nutritionally richer than polished rice. It is known that the parboiled rice, owing to its high vitamin contents, in the last century allowed to defeat the "beri beri", a serious disease caused by the vitamin B deficiency, largely widespread in Asiatic colonies where rice was the basic element of daily diet.

The following table shows the best nutritional characteristics of the *immature grain, damaged parboiled rice* and *broken parboiled rice* as compared with similar polished rices.

| PARAMETERS | | POLISHED RICE | BROKEN POLISHED RICE | IMMATURE GRAIN | DAMAGED PARBOILED RICE | BROKEN PARBOILED RICE |
|---|---|---|---|---|---|---|
| Chemical | | | | | | |
| Dry subst. | % | 89 | 88 | 87 | 88 | 88 |
| Raw proteins | % | 7.2 | 7.6 | 9.0 | 7.7 | 7.6 |
| Raw fats | % | 0.4 | 0.7 | 1.8 | 1.10 | 0.98 |
| Ashes | % | 0.5 | 0.8 | 2.0 | 1.20 | 1.01 |
| Raw fibre | % | 0.5 | 0.6 | 2.2 | 0.7 | 0.5 |
| Starch | % | 77 | 69 | 66 | 68 | 69 |
| Calcium | % | 0.02 | 0.03 | 0.04 | 0.04 | 0.04 |
| Phosphorus | % | 0.11 | 0.27 | 0.20 | 0.22 | 0.21 |
| Magnesium | % | 0.02 | 0.11 | 0.15 | 0.15 | 0.14 |
| Potassium | % | 0.11 | 0.13 | 0.20 | 0.20 | 0.20 |
| Sodium | % | 0.02 | 0.07 | 0.07 | 0.08 | 0.08 |
| Iron | mg | 14 | 29 | 12 | 22 | 21 |
| Vitam. PP | mg | 5.1 | 5.5 | 37.60 | 28.0 | 26.5 |
| Vitam E | mg | 1 | 6 | 10 | 9 | 9 |
| Riboflavin (B2) | mg | 0.03 | 0.04 | 0.80 | 0.6 | 0.6 |
| Thiamine | mg | 0.7 | 1.4 | 2.90 | 2.5 | 2.5 |
| Pyridoxine (B6) | mg | 0.4 | 0.4 | 5 | 4 | 4 |
| Niacin | mg | 15 | 23 | 60 | 50 | 50 |
| Choline | mg | 902 | 870 | 850 | 900 | 900 |

| Physical | | | | | | |
|---|---|---|---|---|---|---|
| Length | mm | 4.80 | 1.8-3.2 | 4.3-5.2 | 4.5-7.0 | 2.25-5.25 |
| Width | mm | 2.92 | 2.80-2.92 | 1.5-3.1 | 2.8-3.1 | 2.80-3.10 |
| Thickness | mm | 2.11 | 1.80-2.11 | 1.3-2.1 | 1.9-2.2 | 1.9-2.2 |
| Shape | | Regular round | Regular broken | Stunted round | Irregular round | Regular broken |
| | | | | | | |

| Particle size: | | | | | | |
|---|---|---|---|---|---|---|
| > 4.00 mm | % | 0 | 0 | 0.00 | 0.00 | 0 |
| > 3.15 mm | % | 0.50 | 0 | 0.40 | 0.00 | 0 |
| > 2.50 mm | % | 29.00 | 25.70 | 26.10 | 6.60 | 10.3 |
| > 2.00 mm | % | 65.00 | 55.70 | 54.60 | 46.40 | 64.5 |
| < 2.00 mm | % | 5.50 | 18.60 | 18.90 | 47.00 | 25.2 |
| App. Density | g/l | 820 | 800-850 | 700/750 | 750/800 | 800-850 |
| Colour | | Snow-white | Snow-white | Green-brown | Ambered white Stained | Ambered white |

A limit to an adequate use of *immature grain, damaged parboiled rice* and *broken parboiled rice* is their organoleptic feature characterized by a too strong taste and a poor palatability, as well as, when used in human feeding, even the low attractive aesthetic-physical feature, particularly with reference to the colour and the stunted shape of the respective kernels or broken rise, as evident from the above table.

Another limit of such raw materials to the use of rice flours, even when ultrafinely milled, in the bread-baking, pasta, biscuits and baked product industry in general, is the ice or sand chewing effect.

Alternatively, such flours, if obtained from polished rice and/or parboiled rice, are hardly usable even in petfood production, as their hardness makes difficult the milling by usual mills and the ultra-white colour of imperfectly milled particles affects the homogeneity of the texture of expanded croquettes. Furthermore, due to the high percentage of high-expansion starch, the rice flour obtained from polished rice or polished broken rice easily unbalances the extruder equilibrium, thereby causing shape and specific weight unhomogeneity of the expanded croquettes.

As indicated above, for these reasons the rice by-products named *immature grain, damaged parboiled rice* and *broken parboiled rice* have never been used for producing puffed rice or preparing rice-based food products and consequently have always had a price much lower than other by-products, such as polished BROKEN rice, as being considered to have a low commercial value.

In fact, in rice factories, it is custom to pay no particular attention to their selection and separation, while leaving them, if not even adding them, to the other by-products having even poorer commercial value, such as middlings, husk, fine broken rice (tip)or the germ. An only other use known up to now of *immature grain, damaged parboiled rice* and *broken parboiled rice* is, as such, as food for poultry or aviary birds.

Therefore, the object of the present invention is to obtain a rice-based food product alternative to the puffed rice obtained up to now from only polished rice and broken rice thereof not subjected to parboiling treatment.

Furthermore, an object of the present invention is to obtain a rice-based food product showing organoleptic characteristics as to make it suitable for zootechnical use.

A further object of the invention is to obtain a rice-based food product having organoleptic and aesthetic characteristics at least comparable to those of the puffed rice obtained from polished rice, so that it is palatable for a human consumer.

Yet another object of the invention is to provide a rice-based food product starting from by-products of rice industry.

The above objects have been achieved by a process for making a rice-based food product that uses as raw material a material selected from the group of rice processing by-products consisting of *immature grain, damaged parboiled rice, broken parboiled rice* and mixtures thereof, as defined in claim 1.

The process according to the invention for preparing a rice-based food product comprises the steps of:
a) selecting a raw material selected from the group consisting of *immature grain, damaged parboiled rice, broken parboiled rice* and mixtures thereof;
b) dry and/or vacuum cooking-toasting the raw material thus selected; and
c) puffing the products so pre-treated.

Further characteristics and advantages of the invention will result more evident from the following detailed description, which is given by way of non-limiting example and with reference to examples of preparation of rice-based food products of the invention.

Therefore, the invention relates to a process for making a rice-based food product which includes the step a) of selecting a raw material selected from the group of *immature grain, damaged parboiled rice, broken parboiled rice* or mixtures thereof by size and/or specific weight.

This selecting step a) advantageously includes the removal of impurities, clots or excessively fine parts, in order to obtain a raw material which can be by size and composition as much homogenous as possible in terms of size and specific weight. Thus, this step is preferably carried out by using special screens and densimetric tables. More preferably, the raw material so selected, before being conveyed to step b), may be subjected to a ventilating process, which allows to remove possible powders still present on the raw material. Advantageously, at the end of the selecting and/or ventilation step, the raw materials are subjected to a sample control of organoleptic type in order to identify possible imperfections.

Specifically, the raw materials are drawn from their storage silos and optionally mixed, and then conveyed to a selector (a sizer having vibroscreens and a densimetric table, for example "Buhler"). The raw material grains so selected on the basis of homogeneity in shape and specific weight can be passed through a forced powder sucker (such as a "Buhler"-type winnower), where such materials are ventilated, thus resulting in a total powder removal from the whole grain surface. Therefore, the selected and optionally ventilated grains are conveyed to the next cooking-toasting step.

According to the invention, the selecting step is followed by the dry and/or vacuum cooking-toasting step b), which consists of heating the raw material to a temperature of 100 to 140°C, preferably within a cooking unit (such as a rotary drum cooker-toaster such as the CERERE-type), where the product preferably stands for about 5 minutes; or using a batch mixer-cooker (such as a FORBERG Rotating Vacuum Coater, suitably adapted for heating), where the product preferably stands for about 3 minutes under vacuum. In this step, moisture is also advantageously reduced by heating and/or negative pressure or by vacuum.

Therefore, the grains from step b) are ready for the puffing process of step c). Specifically, the cooked-toasted grains are fed into a puffing unit (such as Juppiter 2T-type by CERERE), preferably of the rotating autoclave-type, wherein they are preferably subjected to a pressure of 6*10⁵ Pa to 14*10⁵ Pa (6-14 bar) and even more preferably of 8*10⁵ Pa to 14*10⁵ Pa (8-14 bar).

As the desired pressure is achieved, the grains are expanded, preferably through the opening of the valve that keeps the tightness of the autoclaves of the puffing unit, and the obtained puffed rice product is accumulated in the collecting chambers.

So as obtainable from the above inventive process, the puffed immature grain and/or puffed damaged parboiled rice and/or puffed broken parboiled rice preferably have a zootechnical use, as defined in claim 19.

Advantageously, before the cooking-toasting step b) and after the selecting step a), the invention includes the steps of:
a1) conditioning the selected raw material; and
a2) stabilizing the selected and conditioned raw material.

In the conditioning step a1), the raw material, after having been suitably selected and optionally ventilated, is subjected to a conditioning step in order to uniform the moisture. Preferably, the conditioning step a1) allows to achieve a moisture in the range of 15-16% and takes place in a conditioner (such as a Wenger-type asymmetric twin reel conditioner) where the grains are moistened by feeding low-pressure steam and kept under stirring to allow the soaking of the grains and to make the moisture homogeneous. Preferably, the steam pressure is about 0.5 bar and the stirring time is about 15 minutes.

In the stabilizing step a2), the conditioned grains exiting from step a1), and thus more permeable, are subjected to a stabilization treatment with at least one stabilizing agent suitable for preventing formation of moulds, growth of yeasts, undesired action of enzymes and oxidation of fat matter. Optionally, in the stabilizing step, taste modifying agents may be also added, i.e. agents capable to improve the product palatability. Preferably, the stabilizing agents are selected from the group consisting of antimould and antimicrobial agents (such as propionic acid, calcium propionate, sorbic acid, fumaric acid, acetic acid); and antioxidants (such as BHA, BHT, ethoxiquin, lactic acid, citric acid, extracts of officinal plants rich in natural D tocopherols, alpha tocopherol acetate). The taste modifying agents, optionally added to the stabilizing agents, may be selected from the group consisting of meat extracts, fish extracts, vegetable and herb extracts, monosodium glutamate, protein hydrolyzates in powder or liquid form, simple or essential oils, natural flavourings, sugars, amino acids. Such stabilizing and taste modifying agents may be dispersed by any known means, such as by a rotary drum with flow regulators and WENGER-type spray dispersers.

Preferably, the food product obtainable by the process according to the invention, that has been further conditioned (step a1)) and stabilized (step a2)):
- may be defined "puffed brown rice", if obtained from *immature grain;*
- may be defined either "puffed parboiled rice" or simply "puffed rice", if obtained from *damaged parboiled rice* and/or *broken parboiled rice.*

According to the invention and advantageously, a step a3) of whitening the raw material may be provided that has been conditioned and stabilized in steps a1) and a2) respectively.

Therefore, the raw material *immature grain, damaged parboiled rice* and/or *broken parboiled rice,* after having been appropriately selected (step a), conditioned (step a1)) and stabilized (step a2)), is subjected to a whitening step a3) by mechanical action by means of known machines and/or by action of one or more chemical-mineral whitening agents. Preferably, the mechanical whitening action is carried out by appropriately regulated known machines (such as reduced action SATAKE hullers), whereas the chemical action is provided by a chemical-mineral whitening agent, which is one or a mixture of whitening food technological additives (such as orthophosphoric acid, hydrochloric acid, calcium carbonate, dicalcium phosphate, titanium dioxide). According to the invention, through the step a3) the object to uniform the surface colour of grains is achieved.

The so whitened grains may be thus conveyed to the cooking-toasting step b) of the invention.

The process of the invention, which includes the whitening step a3), allows to obtain a puffed *immature grain* and/or a puffed *damaged parboiled rice* and/or a puffed *broken parboiled rice* having brighter and more uniform colour, which are preferably intended for human food, as defined in claim 20.

Advantageously and optionally, the puffed *immature grain* and/or the puffed *damaged parboiled rice* and/or the puffed *broken parboiled rice* exiting from the puffing step c) may be used in the physical state in which they are, therefore as whole or broken grains selected or mixed one another or, even more advantageously, they may be further converted into granules of various sizes or into flours of various particle sizes.

Advantageously, after the puffing step c), optionally after the steps a1), a2) and a3), the invention may include the optional steps of:
c1) granulating the puffed rice;
c2) milling the puffed rice.

Therefore, preferably and advantageously, after the puffing step c), the invention includes the step c1) of granulating the puffed *immature grain* and/or the puffed *damaged parboiled rice* and/or the puffed *broken parboiled rice,* which converts them in granules of different size.

In this case, also the already known *puffed polished rice* and/or *puffed broken polished rice* may be mixed with the puffed products of the invention before carrying out the granulating step for preparing granules.

Obtaining granules of any type of puffed rice, according to this invention, is carried out advantageously after puffing. The granulation is carried out by shredder machines (shredders having opposed or helical rotary blades, such as those of SAETTI or BERTUZZI-type).

Advantageously and optionally, the various types of *puffed rices* exiting from the puffing step c), or the calibration rejects of their granules exiting from the granulation step c1), may be milled (step c2) by mills (such as a hammer mill DFZC-1265 BUHLER-type). Preferably, precooked rice soups or precooked rice flours may be obtained therefrom.

Advantageously and optionally, the various types of *puffed rices* exiting from the puffing step c), or the granules thereof exiting from the granulation step c1) may be coated, before packaging, with nutrients and/or food components.

Therefore, preferably and advantageously, after the puffing step c) and/or the granulating step c1), the invention includes the step (step c3) of distributing various nutrients and/or food components over the puffed *immature grain* and/or the puffed *damaged parboiled rice* and/or the puffed *broken parboiled rice.* This distributing step is carried out by using rotary drums (such as WENGER's Coating & Enrobing) or under vacuum mixers (such as FORBERG's Rotating Vacuum Coater), so that the components are at least partly sorbed by the puffed materials.

Preferably, the coating step c3) is carried out in a feed hopper of a rotary drum or in a rotating mixer and comprises the supply of a nutrient and/or food additives-based seasoning, particularly a liquid meat hydrolyzates-based mixture. Such a liquid hydrolyzates-based mixture may comprise, for instance, meat extracts, amino acids, vitamins and/or mineral salts. For carrying out the supply, a plurality of nozzles capable of distributing the nutrients and/or the food additives are associated to the rotary drum or the rotating mixer.

As suggested above, the step a2) of stabilizing *immature grain,* and/or *damaged parboiled rice,* and/or *broken parboiled rice* optionally includes the addition of taste modifiers. If the taste modifier additives are food or aromatic substances susceptible of being damaged by the cooking step b) and the puffing step c), then the step of supplying such substances can be carried out as a step c3) after the step c) or after the step c1). In this case, if the liquid ingredient exceeds 12% of the treated mixture, a vacuumtight heated mixer (such as FORBERG's Rotating Vacuum Coater) has to be used instead of a rotary drum machine.

These food substances may be one or more substances selected from the following groups: oils or fats (such as olive oil, sunflower oil or mixtures of various oils, chicken fat, fish fat or various mammal fats, butter, powdered milk and derivatives); taste modifiers (such as meat or fish extracts, protein hydrolyzates, monosodium glutamate, glutamic acid); flavouring ingredients (such as cocoa, vanilla, hazelnuts, nuts, various seeds, fruit or dehydrated vegetables); sweeteners (such as glucose, fructose, sucrose, various sugars, aspartame); probiotics or nutraceuticals (such as fructo-oligosaccharides, vitamins, trace elements, mannano-oligosaccharides, taurine, lycopene, beta-carotene, linoleic acid, omega 3-6, aromatic and/or officinal plant extracts, seaweeds, amino acids and derivatives, lysophosphatidyl choline, lecithins and derivatives, lysolecithin).

Preferably, the whole system of the invention is controlled by electronic control means which allow to manage its working, and particularly the process, times, temperatures, pressures of the various operations, as well as the amounts of raw materials and additives used, in an optimal and wholly automatic manner.

Therefore, the process according to the invention allows to obtain a rice-based food product, i.e. *puffed immature grain* or *puffed damaged parboiled rice* or *puffed broken parboiled rice* or a mixture thereof, both as whole and as broken grains, and as granulates or flours, which can be an alternative to puffed rice derived from polished rice in zootechnics and human feeding.

With respect to the puffed rice obtained from polished rice, the rice-based food product according to the invention has further advantageously improved nutritional characteristics, even not coated in step c3).

By way of non-exhaustive example in zootechnical feeding, the food product according to the invention may be used as whole or broken grains for feeding pets and as flours for the weaning and growth of monogastric animals.

Particularly, the puffed rice obtained by the process of the invention and with step a3) is advantageously characterized by aesthetic and taste properties that make it an alternative to the puffed rice obtained from polished rice, particularly for human feeding.

By way of non-exhaustive example, the food product according to the invention providing for the whitening step may be used in human feeding for the preparation of breakfast muesli, as a stuffing for confectionery and chocolate, for the preparation of ready-to-use soups and minestrone, rice biscuits, crackers or snacks, rice creams and semolinas.

The product obtained according to the present invention may be used as an ingredient in food production.

Puffed *immature grain, damaged parboiled rice* or *broken parboiled rice* or mixtures thereof obtained from steps a), b) and c) may be used for producing the following animal food product types: complementary pet feedstuff, complementary livestock feedstuff.

Preferably, the *puffed immature grain* obtainable by the process according to the invention and the conditioning a1) and stabilizing a2) steps, optionally subjected to steps c1) and c2) may be used for producing the following types of food products both for human and zootechnical use: *brown rice, brown risotto, soup with brown rice, brown rice granules, brown rice cream, brown rice semolina, brown rice flour.* According to the invention, the puffed product will advantageously be a ready-to-use product.

Preferably, the puffed *damaged parboiled rice* and/or the puffed *broken parboiled rice* obtainable by the process according to the invention and the conditioning a1) and stabilizing a2) steps, optionally subjected to steps a3), c1) and c2) may be used for producing the following types of food products both for human and zootechnical use: *parboiled rice, parboiled risotto, soup with parboiled rice, parboiled rice granules, parboiled rice semolina, parboiled rice cream, parboiled rice flour.* According to the invention, the puffed product will advantageously be a ready-to-use product.

The mixture of puffed *immature grain, damaged parboiled rice* and *broken parboiled rice obtained* according to the present invention mixed one another may be used as ingredients for producing food products selected both as whole and as broken, granulated or milled kernels.

Preferably, the puffed *immature grain,* the puffed *damaged parboiled rice* and the puffed *broken parboiled rice*, used alone or in mixture one another, and subjected to the processes of steps a1), a2), a3), c1) and c2), through the addition of one or more suitable nutrients/food ingredients to the puffed mixture as provided for in step c3), may be used for producing the following types of food products both for human and zootechnical use: *hazelnut rice, caramelized rice, cocoa rice, honey rice, sugared rice, complementary feedstuff consisting of puffed rice and sucrose, complementary rice-vegetable-based feedstuff and complete rice-meat-vegetable-based feedstuff.*

Therefore, the product according to the invention can be used as a basis for food diets, such as weaning, growing, maintenance, hypolipidic, hyperdigestible, hypoproteic, hypoallergenic or low-salt diets or even gluten-free diets for celiac disease patients.

As it will be evident from the examples of implementation of the process according to the invention, it is an object of the invention also a system for implementing the above process, characterized in that it is arranged to work in continuous a metered flow of rice by-products and preferably comprises, in sequence, a selecting unit, a ventilating unit, a conditioning unit, a whitening and stabilizing unit, a cooking-toasting unit, a pressure puffing unit, a unit for coating with other nutrients, possibly a granulating and milling unit for obtaining products having finer particle size, while automatic process control means being associated to at least some of such units.

Some illustrative and non-limiting examples of preparation of the rice-based food product of the invention now follow.

### Examples

### Example 1: Preparation of puffed rice, derived from raw materials named as immature grain, damaged parboiled rice or broken parboiled rice to be intended for food or zootechnical use.

The raw material consisting of *immature grain* and/or *damaged parboiled rice* and/or *broken parboiled* rice was fed to a selecting unit consisting of vibroscreens and a densimetric table (e.g. Buhler), in order to carry out the above-described selecting step a). The grains were selected by removing the parts higher than 4 mm and lower than 1.5 mm.

The raw material was then conveyed to a rotary drum cooking unit for carrying out the cooking-toasting step b) at a temperature of 120-130°C. After such a treatment, the grain characteristics were the following:

| PARAMETERS | TOASTED IMMATURE GRAIN |
|---|---|
| Temperature | 130° C. |
| Moisture | 10 % |

At the end of this step, the cooked-toasted grains were fed to an autoclave-type puffing unit for step c), comprising a plurality of autoclaves, each of them being associated to a corresponding collecting chambers. In these autoclaves, the grains were soaked with steam at a pressure of 8*10⁵ Pa to 14*10⁵ Pa (8-14 bar). After about some minutes, the autoclaves were opened in order to obtain the expansion of the grains, immediately accumulated in suitable collecting chambers.

The puffed grains were of 18 to 3 mm, with an apparent density of 100 - 130 g/l.

After the puffing step, the rice-based food product according to the invention was packaged with the definition of *puffed rice* or *brown rice* when intended for food use, or with the definition of *puffed rice*- or *brown rice-based feedstuff* when intended for zootechnical use.

Advantageously, in order to obtain higher added value products, the puffed *immature grain* obtained through the present invention was conveyed to a turbo or cylinder mill of the known types (such as DFZC-1265 BUHLER). After such a treatment, the rice grains were converted into flour having the following characteristics:

| PARAMETERS | PUFFED RICE FLOUR |
|---|---|
| Particle size: | |
| < 2.00 mm | 100 % |
| Precooked starch | 84-90.5 % |
| Apparent density | 250-400 g/l |
| Moisture | 6-9.5% |
| Colour | Beige with brown dots |

After the step of milling, which was followed by a selecting step through a vibroscreen, and storing in flour bins, when flours of various particle sizes were desired, the rice-based food product according to the invention was packaged with the definition of *puffed rice* or *brown rice flour* or *cream,* when intended for food use, or with the definition of *puffed rice flour-based feedstuff* when intended for zootechnical use.

Advantageously, in order to obtain higher added value products, the *puffed rice* obtained from the process according to the invention may be conveyed to the next coating step c3) as described in the example 4.

### Example 2: Preparation of puffed brown rice (puffed immature grain), derived from the raw material named as immature grain to be intended for food or zootechnical use.

The raw material consisting of *immature grain,* which is obtained as a waste of Italian round rice, was subjected to organoleptic analysis to record useful parameters before starting the treatments provided for the present invention, which parameters were:

| PARAMETERS | IMMATURE GRAIN |
|---|---|
| Length mm | 4.30 - 5.20 |
| Width mm | 1.50 - 3.10 |
| Thickness mm | 1.30 - 2.10 |
| Shape | Round stunted |

| Particle size: | |
|---|---|
| > 4.00 mm | 0 |
| > 3.15 mm | 0.50 % |
| > 2.50 mm | 26.10 % |
| > 2.00 mm | 54.50 % |
| < 2.00 mm | 18.90 % |
| Apparent density | 700 - 750 g/l |
| Precooked starch | 0 |
| Moisture | 13 % |
| Surface colour | Green-brown |

The raw material was then fed to a selecting unit consisting of vibroscreens and a densimetric table (e.g. Buhler), for carrying out the above-described selecting step a). The grains were analyzed and the grain characteristics after such first treatment were as follows:

| PARAMETERS | SELECTED IMMATURE GRAIN |
|---|---|
| Length mm | 4.80 - 5.20 |
| Width mm | 2.90 - 3.10 |
| Thickness mm | 1.90 - 2.10 |
| Shape | Round stunted |

| Particle size: | |
|---|---|
| > 4.00 mm | 0 |
| > 3.15 mm | 0.10 % |
| > 2.50 mm | 59.50 % |
| > 2.00 mm | 31.50 % |
| < 2.00 mm | 8.90 % |
| Apparent density | 750 - 800 g/l |
| Precooked starch | 0 |
| Moisture | 13 % |
| Surface colour | Green-brown |

The raw material was then conveyed in an asymmetric screw conditioning unit, step a1), in order to increase and make the moisture uniform, and after such a treatment the grain characteristics were as follows:

| PARAMETERS | CONDITIONED IMMATURE GRAIN |
|---|---|
| Length mm | 4.85 - 5.25 |
| Width mm | 2.95 - 3.15 |
| Thickness mm | 1.95 - 2.15 |
| Shape | Round stunted |

| Particle size: | |
|---|---|
| > 4.00 mm | 0 |
| > 3.15 mm | 0.20 % |
| > 2.50 mm | 60.50 % |
| > 2.00 mm | 32.50 % |
| < 2.00 mm | 6.80 % |
| Apparent density | 770 - 820 g/l |
| Precooked starch | 0 |
| Moisture | 18 % |
| Surface colour | Green-brown |

The raw material was thus conveyed to a rotary drum stabilizing unit having additive distributors in step a2) (additives as indicated in the following table), for carrying out the stabilizing step in order to prevent the formation of moulds and yeasts, oxidation of fats or undesired enzyme action, and after such a treatment the raw material resulted to be added of as follows:

| PARAMETERS | STABILIZED IMMATURE GRAIN |
|---|---|
| Conditioned immature grain | 81.26 % |
| Phosphoric acid | 0.5 % |
| Propionic acid | 0.2 % |
| Citric acid | 0.02 % |
| Natural tocopherols | 0.01 % |
| BHA | 0.01 % |
| Moisture | 18 % |

The raw material was then conveyed to a rotary drum cooking unit for carrying out the cooking-toasting step b) at the temperature of 120-130°C. After such a treatment, the grain characteristics were the following:

| PARAMETERS | TOASTED IMMATURE GRAIN |
|---|---|
| Temperature | 130° C. |
| Moisture | 10 % |

At the end of such a step, the cooked-toasted grains were fed to an autoclave-type puffing unit for step c), comprising a plurality of autoclaves, each of them being associated to a corresponding collecting chambers. In such autoclaves, the grains were soaked with steam at a pressure of 8*10⁵ Pa to 14*10⁵ Pa (8-14 bar). After about some minutes, the autoclaves were opened in order to obtain the expansion of the grains, immediately accumulated in suitable collecting chambers.

The *puffed immature grain* had the following characteristics:

| PARAMETERS | PUFFED IMMATURE GRAIN |
|---|---|
| Length mm | 8.30 - 18.20 |
| Width mm | 3.50 - 8.10 |
| Thickness mm | 3.00 - 5.10 |
| Shape | Round expanded |

| Particle size: | |
|---|---|
| > 4.00 mm | 60.00 % |
| > 3.15 mm | 16.50 % |
| > 2.50 mm | 15.60 % |
| > 2.00 mm | 6.30 % |
| < 2.00 mm | 1.60 % |
| Apparent density | 85 - 110 g/l |
| Precooked starch | 84 - 90.50 % |
| Moisture | 6 - 9.50 % % |
| Surface colour | Milky white with brown veins |

After the puffing step, the rice-based food product according to the invention was packaged with the definition of *puffed brown rice* when intended for food use, or with the definition of *brown rice-based feedstuff* when intended for zootechnical use.

Advantageously, in order to obtain higher added value products, the *puffed immature grain* obtained through the present invention was conveyed to a granulator (such as a BERTUZZI rotary blade shredder) and after such a treatment, the rice grains were converted into granules having the following characteristics:

| PARAMETERS | PUFFED IMMATURE GRAIN GRANULES |
|---|---|
| Particle size: | |
| > 4.00 mm | 0 % |
| > 3.15 mm | 38-42 % |
| > 2.50 mm | 44-48 % |
| < 2.00 mm | 1-2 % |
| Precooked starch | 84-90.5 % |
| Apparent density | 85-110 g/l |
| Moisture | 6-9.5% |
| Colour | White with brown dots |

After the granulating step, the rice-based food product according to the invention was packaged with the definition of *puffed brown rice granules* when intended for food use, or with the definition of *puffed brown rice-based feedstuff* when intended for zootechnical use.

Advantageously, in order to obtain higher added value products, the *puffed immature grain* obtained through the present invention was conveyed to a turbo or cylinder mill (such as DFZC-1265 BUHLER). After such a treatment, the rice grains were converted into flour having the following characteristics:

| PARAMETERS | PUFFED IMMATURE GRAIN FLOUR |
|---|---|
| Particle size: | |
| < 2.00 mm | 100 % |
| Precooked starch | 84-90.5 % |
| Apparent density | 250-400 g/l |
| Moisture | 6-9.5% |
| Colour | White with brown dots |

After the milling step, which was followed by a vibroscreen selecting step and storage in flour bins when flours of various particle sizes were desired, the rice-based food product according to the invention was packaged with the definition of *puffed brown rice flour* or *cream,* when intended for food use, or with the definition of *puffed brown rice flour-based feedstuff* when intended for zootechnical use.

Advantageously, in order to obtain higher added value products, the *puffed brown rice* and the *puffed brown rice granules* obtained by the process according to the invention may be conveyed to the next coating step c3) as described in the example 4.

### Example 3: Production of puffed rice (puffed damaged parboiled rice or puffed broken parboiled rice) for feeding or zootechnical use, derived from the raw material named as damaged parboiled rice or broken parboiled rice.

The raw material consisting of *damaged parboiled rice* and/or *broken parboiled rice* was subjected to organoleptic analysis in order to record useful parameters before starting the treatments provided for the present invention, they were:

| PARAMETERS | DAMAGED PARBOILED RICE | BROKEN PARBOILED RICE |
|---|---|---|
| Length mm | 4.50 - 7.00 | 2.25 - 5.25 |
| Width mm | 2.80 - 3.10 | 2.80 - 3.10 |
| Thickness mm | 1.90 - 2.20 | 1.90 - 2.20 |
| Shape | Round | Round broken |

| Particle size: | | |
|---|---|---|
| > 4.00 mm | 0 | 0 |
| > 3.15 mm | 0 | 0 |
| > 2.50 mm | 6.60 % | 10.30 % |
| > 2.00 mm | 46.40 % | 64.50 % |
| < 2.00 mm | 47.00 % | 25.20 % |
| Apparent density | 750 - 800 g/l | 800 - 850 g/l |
| Precooked starch | 0 | 0 |
| Moisture | 13 % | 13 % |
| Surface colour | Ambered white | Ambered white |

The raw material was then fed to a selecting unit consisting of vibroscreens and a densimetric table (e.g. Buhler), in order to carry out the above-described selecting step a). Grains were analyzed after such a first treatment whose characteristics were as follows:

| PARAMETERS | SELECTED DAMAGED PARBOILED RICE | SELECTED BROKEN PARBOILED RICE |
|---|---|---|
| Length mm | 4.80 - 7.20 | 2.30 - 5.25 |
| Width mm | 2.90 - 3.10 | 2.90 - 3.10 |
| Thickness mm | 1.95 - 2.20 | 1.95 - 2.20 |
| Shape | Round | Round broken |

| Particle size: | | |
|---|---|---|
| > 4.00 mm | 0 | 0 |
| > 3.15 mm | 0 | 0 |
| > 2.50 mm | 6.60 % | 10.30 % |
| > 2.00 mm | 46.40 % | 74.50 % |
| < 2.00 mm | 47.00 % | 15.20 % |
| Apparent density | 750 - 800 g/l | 800 - 850 g/l |
| Precooked starch | 0 | 0 |
| Moisture | 13 % | 13 % |
| Surface colour | Ambered white | Ambered white |

The raw material was then conveyed to an asymmetric screw conditioning unit, step a1), in order to increase and uniform the moisture. After such a treatment, the characteristics of the grains were as follows:

| PARAMETERS | CONDITIONED DAMAGED PARBOILED RICE | CONDITIONED BROKEN PARBOILED RICE |
|---|---|---|
| Length mm | 4.85 - 7.25 | 2.35 - 5.30 |
| Width mm | 2.95 - 3.15 | 2.95 - 3.15 |
| Thickness mm | 2.00 - 2.25 | 1.95 - 2.20 |
| Shape | Round swelled | Round broken swelled |

| Particle size: | | |
|---|---|---|
| > 4.00 mm | 0 | 0 |
| > 3.15 mm | 0 | 0 |
| > 2.50 mm | 8.50 % | 12.50 % |
| > 2.00 mm | 48.20 % | 75.00 % |
| < 2.00 mm | 43.30 % | 12.50 % |
| Apparent density | 770 - 820 g/l | 820 - 870 g/l |
| Precooked starch | 0 | 0 |
| Moisture | 18 % | 18 % |
| Surface colour | Ambered white | Ambered white |

The raw material was thus conveyed to a rotary drum stabilizing unit including additive spreaders (as indicated in the following table), in order to carry out the stabilizing step a2) for preventing the formation of moulds and yeasts, oxidation of fats or undesired enzyme action. After such a treatment, the raw material had such additives:

| PARAMETERS | STABILIZED DAMAGED PARBOILED RICE | STABILIZED BROKEN PARBOILED RICE |
|---|---|---|
| Conditioned rice | 80.76 % | 80.76 % |
| Phosphoric acid | 0.5 % | 0.5 % |
| Propionic acid | 0.2 % | 0.2 % |
| Citric acid | 0.02 % | 0.02 % |
| Natural tocopherols | 0.01 % | 0.01 % |
| BHA | 0.01 % | 0.01 % |
| Moisture | 18.50 % | 18.50 % |

The raw material was then conveyed to a rotary drum cooking unit for carrying out the cooking-toasting step b) at a temperature of 120-130°C.

After such a treatment, the characteristics of the grains were as follows:

| PARAMETERS | TOASTED DAMAGED PARBOILED RICE AND BROKEN PARBOILED RICE |
|---|---|
| Temperature | 130° C |
| Moisture | 10 % |

At the end of such a step, the cooked-toasted grains were fed to an autoclave puffing unit for step c), comprising a plurality of autoclaves, each of them being associated to a corresponding collecting chambers. In these autoclaves, the grains were soaked with steam at a pressure of 8*10⁵ Pa to 14*10⁵ Pa (8-14 bar). After about some minutes, the autoclaves were opened in order to obtain the expansion of the grains, immediately accumulated in suitable collecting chambers.

The *damaged parboiled rice* and/or *broken parboiled rice* had the following characteristics:

| PARAMETERS | PUFFED DAMAGED PARBOILED RICE | PUFFED BROKEN PARBOILED RICE |
|---|---|---|
| Length mm | 9.30 - 20.00 | 4.30 - 10.80 |
| Width mm | 4.50 - 9.10 | 14.30 - 9.0 |
| Thickness mm | 3.10 - 4.50 | 3.10 - 4.50 |
| Shape | Round expanded | Round expanded |

| Particle size: | | |
|---|---|---|
| > 4.00 mm | 0 | 0 |
| > 3.15 mm | 14.50 % | 14.50 % |
| > 2.50 mm | 64.89 % | 64.89 % |
| > 2.00 mm | 20.61 % | 20.61 % |
| < 2.00 mm | | |
| Apparent density | 85 - 110 g/l | 85 - 110 g/l |
| Precooked starch | 84 - 90.50 % | 84 - 90.50 % |
| Moisture | 6 - 9.50 % % | 6 - 9.50 % % |
| Surface colour | Ambered white | Ambered white |

After the puffing step, the rice-based food product according to the invention was packaged with the definition of *puffed rice* when intended for food use, or with the definition of *puffed rice-based feedstuff* when intended for zootechnical use.

Advantageously, in order to obtain higher added value products, the *puffed damaged parboiled rice* and/or the *puffed broken parboiled rice* obtained by the present invention were conveyed to a granulator (such as a rotary blade shredder BERTUZZI). After such a treatment, the rice grains were converted into granules having the following characteristics:

| PARAMETERS | PUFFED DAMAGED PARBOILED RICE and/or BROKEN PARBOILED RICE GRANULES |
|---|---|
| Particle size: | |
| > 4.00 mm | 0 % |
| > 3.15 mm | 38-42 % |
| > 2.00 mm | 44-48 % |
| < 2.00 mm | 1-2 % |
| Precooked starch | 84-90.5 % |
| Apparent density | 85-110 g/l |
| Moisture | 6-9.5% |
| Colour | Ambered white |

After the granulating step, the rice-based food product according to the invention was packaged with the definition of *puffed rice granules* when intended for food use, or with the definition of *puffed rice-based feedstuff* when intended for zootechnical use.

Advantageously, in order to obtain higher added value products, the *puffed damaged parboiled rice* and/or *broken parboiled rice* obtained by the present invention were conveyed to a hammer or cylinder mill of the known type (e.g. BUHLER). After such a treatment, the rice grains were converted into flour having the following characteristics:

| PARAMETERS | PUFFED DAMAGED PARBOILED RICE and/or BROKEN PARBOILED RICE FLOUR |
|---|---|
| Particle size: | |
| < 2.00 mm | 100 % |
| Precooked starch | 84-90.5 % |
| Apparent density | 250-400 g/l |
| Moisture | 6-9.5% |
| Colour | Ambered white |

After the grinding step, which was followed by a selecting step through a vibroscreen (e.g. Rotostar MPAR-HK BUHLER) and storaging in flour bins, when flours of various particle sizes were desired, the rice-based food product according to the invention was packaged with the definition of *puffed rice flour* or *cream,* when intended for feeding use, or with the definition of *puffed rice flour-based feedstuff* when intended for zootechnical use.

Advantageously, in order to obtain higher added value products, the *puffed brown rice* and the *puffed brown rice granules* may be conveyed to the next coating step c3) as described in the example 4.

### Example 4: Production of vitaminized puffed brown rice (puffed immature grain rice) and/or sweetened and vitaminized puffed brown rice granules (puffed immature grain rice granules), for feeding or zootechnical use, by coating with nutrients, derived from the raw material named as immature grain.

The *puffed immature grain* obtained by the process as described in Example 2, was conveyed to the coating step c3).

In this step, the invention provided for the supply of nutrient or aromatic food substances that would be damaged if introduced before the cooking step b) and the puffing step c).

A metered and constant flow of puffed rice, whereon a concentrated water, sucrose and Vitamin E solution was sprayed, was fed into a rotary drum. The following values were observed at the exit of the drum:

| PARAMETERS | PUFFED BROWN RICE |
|---|---|
| **Ingredients:** | |
| Puffed brown rice | 98 % |
| Sucrose | 2% % |
| Vitamin E | 50 mg/kg |

| **Average analysis:** | |
|---|---|
| Moisture | 10 % |
| Raw proteins | 8.5 % |
| Raw fats | 1.5 % |
| Raw fibres | 2 % |
| Raw ashes | 1.9 % |
| Colour | White with brown veins |

The product was packaged as a *complementary puffed brown rice and sucrose feedstuff* for animal use, suitable for all animals that might benefit from being fed with precooked brown rice.

The product was also packaged as a food product for human use, named *puffed brown rice,* suitable with milk and yoghurt for breakfast or as an ingredient for cakes, desserts or cookies.

### Example 5: Production of puffed parboiled rice or puffed broken parboiled rice, derived from the raw materials named as damaged parboiled rice or broken parboiled rice for feeding or zootechnical use, by coating with nutrients.

The *puffed rice* obtained by the process as described in Example 3, was conveyed to the coating step c3).

In this step, the invention provided for the supply of nutrient or aromatic food substances that would be damaged if introduced before the cooking step b) and the puffing step c).

A metered and constant flow of *puffed parboiled rice*, whereon a concentrated water, sucrose and Vitamin E solution was sprayed, was fed into a rotary dru. The following characteristics were observed at the exit of the drum:

| PARAMETERS | PUFFED RICE |
|---|---|
| **Ingredients:** | |
| Puffed parboiled rice | 98 % |
| Sucrose | 2 % |
| Vitamin E | 50 mg/kg |

| **Average analysis:** | |
|---|---|
| Moisture | 10 % |
| Raw proteins | 7.4 % |
| Raw fats | 0.9 % |
| Raw fibres | 0.7 % |
| Raw ashes | 0.8 % |
| Colour | Ambered white |

The product was packaged as a *complementary puffed rice and sucrose feedstuff* for animal use, suitable for all animals that might benefit from being fed with precooked brown rice.

The product was also packaged as a food product for human use, named *puffed rice,* suitable with milk and yoghurt for breakfast or as an ingredient for cakes, desserts or cookies.

### Example 6: Production of puffed white rice (puffed damaged parboiled rice or puffed broken parboiled rice) for feeding or zootechnical use, derived from the raw material named as damaged parboiled rice or broken parboiled rice.

The raw material consisting of *damaged parboiled* rice and/or *broken parboiled rice* was subjected to all the transformation steps as described above in the Example 3, while having included a whitening step a3) after the stabilizing step a2).

The raw material was thus conveyed to a known machine for whitening (modified huller) where the kernel surface, by being softened by the previous treatments, was slightly abraded for removing a first part of coloured pigments.

Subsequently, the treated grains were long mixed in a mixer (e.g. BUHLER) with whitening food technical additives, specifically calcium carbonate and titanium dioxide.

The grains so whitened were conveyed to the cooking-toasting step b) and to the puffing step c) of the invention, as described in the Example 3.

After the puffing step, the rice-based food product according to the invention had a milky white colour similar to that of the puffed rice obtained from polished rice and/or polished broken rice and was thus packaged with the definition of puffed *rice* for feeding use, or with the definition of *puffed rice-based feedstuff* for zootechnical use.

### Example 7: Production of puffed rice hazelnut granule for food use, derived from the raw material known as damaged parboiled rice and/or broken parboiled rice.

Advantageously, in order to obtain higher added value products, the *puffed damaged parboiled rice* and/or the *puffed broken parboiled rice* obtained through the present invention in the Example 3, were conveyed to a granulator (such as a rotary blade shredder BERTUZZI). After such a treatment, the rice grains were converted into granules, like in the Example 3, and conveyed to the coating step c3).

A weighed amount of puffed rice was fed into a vacuumtight screw mixer (such as FORBERG Rotating Vacuum Coater), the mixer was then externally heated to a constant inner temperature of 80°C.

Once the desired temperature was achieved, vacuum was generated by a pump and a concentrated solution of water, salt, sugar, glucose syrup, liquid caramel, hazelnut cream, orthophosphoric acid, Vitamin E was sprayed on the product under stirring.

The product had the following characteristics:

| PARAMETERS | PUFFED PARBOILED GRANULES |
|---|---|
| **Ingredients:** | |
| Puffed rice | 49.40 % |
| Sucrose | 45.00 % |
| Glucose | 0.22 % |
| Sodium chloride | 0.04 % |
| Hazelnut cream | 2.00 % |
| Caramel | 0.5 % |
| Orthophosphoric acid | 0.10 % |
| Vitamin E | 50 mg/kg |
| Water | 3.74 % |

After five minutes mixing, the puffed rice so treated was brought back to room pressure and discharged.

The product so obtained was perfectly dry (6% residual moisture), crispy, smooth, of pleasant smell and taste, to be used as it is or conveyed to the granulation step c1).

After the granulating step, the rice-based food product according to the invention was packaged with the definition of *hazelnut rice granules* for feeding use, and intended for confectionery as a stuffing for filled pralines or toppings for desserts and ice creams.

The example was repeated by using, in place of the hazelnut cream, other creams or food ingredients, such as nuts, almonds, vanilla, cocoa, fruit extracts, freeze-dried fruit, honey and powdered milk, with optimal results.

### Example 8: Production of ready-to-use brown rice and/or ready-to-use brown rice soup for feeding use, derived from the raw material named as immature grain.

The *puffed immature grain* obtained through the process as described in Example 2, was conveyed to the coating step c3).

In this step, the invention provided for supply of nutrient or aromatic food components that would be damaged if introduced before the cooking step b) and the puffing step c).

A weighed amount of puffed rice was fed into a vacuumtight screw mixer (such as FORBERG Rotating Vacuum Coater). Vacuum was generated by a pump, and a concentrated solution of water, meat extract, salt, sugar, aromatic plant extracts, Vitamin E, was sprayed on the product under stirring.

The product had the following characteristics:

| PARAMETERS | PUFFED BROWN RICE |
|---|---|
| **Ingredients:** | |
| Puffed brown rice | 97.95 % |
| Meat extract | 2 % |
| Sodium chloride | 0.5 % |
| Monosodium glutamate | 0.05 % |
| Sucrose | 0.5 % |
| Aromatic plant extracts | 0.1 % |
| Orthophosphoric acid | 0.1 % |
| Vitamin E | 50 mg/kg |
| Water | 5.0% |

After three minutes mixing, the obtained product was brought back to room pressure and discharged.

The product obtained thereby was perfectly dry (6% residual moisture), smooth, of pleasant smell and taste.

The product was packaged as a food product for human use with the name of *puffed brown rice,* suitable for ready-to-use traditional risottos or soups with brown rice.

Specifically, the product of the invention was used for the preparation of a precooked food product instantly ready-to-use by adding hot water and, if desired, other traditional seasonings, such as butter, oil, grated Parmesan cheese, tomato extract, etc. Advantageously, the product of the invention as obtained from the Example 8 may be used for the preparation of industrial or home-made stuffings of ravioli, agnolotti or other stuffed pasta.

### Example 9: Production of a ready-to-use risotto and/or ready-to-use rice soup for feeding use, derived from the raw material named as damaged parboiled rice and/or broken parboiled rice.

The *puffed parboiled rice* obtained by the process as described in Example 3, was conveyed to the coating step c3).

In this step, the invention provided for the supply of nutrient or aromatic food substances that would be damaged if introduced before the cooking step b) and the puffing step c).

A weighed amount of puffed rice was fed into a vacuumtight screw mixer (such as FORBERG Rotating Vacuum Coater). Vacuum was generated by a pump. A concentrated solution of water, meat extract, salt, sugar, aromatic plant extracts and Vitamin E was sprayed on the product under stirring. The product had the following characteristics:

| PARAMETERS | PUFFED BROWN RICE |
|---|---|
| **Ingredients:** | |
| Puffed parboiled rice | 97.795 % |
| Meat extract | 2 % |
| Sodium chloride | 0.5 % |
| Monosodium glutamate | 0.05 % |
| Sucrose | 0.5 % |
| Aromatic plant extracts | 0.1 % |
| Orthophosphoric acid | 0.1 % |
| Vitamin E | 50 mg/kg |
| Water | 5.0% |

After three minutes mixing, the product was brought back to room pressure and discharged.

The product obtained thereby was perfectly dry (6% residual moisture), smooth, of pleasant smell and taste.

The product was packaged as a food product for human use with the name of *puffed brown rice,* suitable for ready-to-use traditional risottos or soups with brown rice.

Specifically, the product of the invention was used for the preparation of a precooked food product ready-to-use by adding hot water and, if desired, other traditional seasonings, such as butter, oil, grated Parmesan cheese, tomato extract, etc. Advantageously, the product of the invention as obtained from the Example 9 may be used for the preparation of industrial or home-made stuffings of ravioli, agnolotti or other stuffed pasta.

### Example 10: Production of a feedstuff for zootechnical use, derived from raw materials named as immature grain, damaged parboiled rice and/or broken parboiled rice with the addition of other puffed cereals and dehydrated vegetables as a mix

The *puffed rice* (or *mixture of puffed rice)* obtained through the process as described in Examples 1, 2 and 3, was mixed with other puffed cereals and dehydrated vegetables and conveyed to the coating step c3).

In this step, the invention provides for the supply of nutrient or aromatic food components that would be damaged if introduced before the cooking step b) and the puffing step c).

A metered and constant flow of the mixture of puffed rice, vegetables and officinal plants, whereon a concentrated water, sucrose and Vitamin E solution was sprayed, was fed into a rotary drum. The following characteristics were observed at the exit of the drum

| PARAMETERS | PUFFED RICE |
|---|---|
| **Ingredients:** | |
| Puffed rice | 98 % |
| Puffed wheat | 2 % |
| Dehydrated carrots | 1 % |
| Spinaches | 1 % |
| Flaked peas | 1 % |
| Dehydrated beets | 1 % |
| Dehydrated officinal plants | 1 % |
| Vitamin E | 100 mg/kg |

| **Average analysis:** | |
|---|---|
| Moisture | 11 % |
| Raw proteins | 9.4 % |
| Raw fats | 1.8 % |
| Raw fibres | 2.7 % |
| Raw ashes | 2 % |

The product was packaged as a *complementary puffed rice, wheat and dehydrated vegetable-based feedstuff* for animal use, suitable for all animals that might benefit from being fed with precooked rice, ready to use after re-hydration.

### Example 11: Production of a complete food for dogs and/or other pets, derived from the raw material named as immature grain, damaged parboiled rice and/or broken parboiled rice, with the addition of meat.

The *puffed rice* (or *puffed rice mixture)* obtained through the process as described in Examples 1, 2 and 3, was conveyed to the coating step c3).

In this step, the invention provided for the mix with micronized powdered nutrients and the supply of nutrient or aromatic food substances that would be damaged if introduced before the cooking step b) and the puffing step c).

A weighed amount of puffed rice, micronized powdered meat, powdered protein hydrolyzates, powdered rice proteins and a premixture of active ingredients was fed into a vacuumtight heated twin screw mixer (such as FORBERG Rotating Vacuum Coater).

After 3 minutes mixing under heat the mixture had achieved the desired temperature of 60°C. Now, vacuum was created in the mixer for three minutes, during which suitable nozzles distributed over the moving product the pre-heated fat and then, after 3 minutes mixing, a liquid protein hydrolyzate.

The following characteristics were observed at the exit of the drum:

| PARAMETERS | PUFFED RICE |
|---|---|
| **Solid ingredients:** | |
| Puffed rice | 58 % |
| Dehydrated mutton | 26 % |
| Rice proteins | 0.5% |
| Vitamin premixture | 0.5 % |
| Powdered hydrolyzates | 1 % |
| Liquid ingredients: | |
| Chicken fat | 7 % |
| Beef fat | 6 % |
| Liquid hydrolyzates | 1 % |

| **Average analysis:** | |
|---|---|
| Moisture | 9 % |
| Raw proteins | 21 % |
| Raw fats | 17 % |
| Raw fibres | 0.7 % |
| Raw ashes | 8 % |

The product was packaged as a *complementary puffed rice and lamb petfood* (e.g. for dogs, cats, ferrets, insect-eating birds) suitable for all animals that might benefit from being fed with precooked rice and lamb meat.

Tests conducted on dogs, consisting of the administration of the food product either as such or moistened have shown optimal palatability, food completeness and hypoallergenicity, complying with the standards required and established by the prevalent literature for these food products.

The example was successfully repeated with other kinds of dehydrated and micronized meats, such as chicken, turkey, beef and/or with micronized fish flours such as those obtained from tuna, herrings, Peruvian fish, cod, etc.

Successful tests have been also conducted on mixtures of such puffed rice, complemented with meat and/or fish proteins, through the addition of other puffed cereals, vegetables and officinal plants.

Therefore, the puffed immature grain and damaged parboiled rice-based product is proposed as an alternative to puffed rice obtained from polished rice and provides for a range of food products having improved nutritional, taste and appearance characteristics, at least comparable with those of polished rice-based food products.

While the invention has been disclosed with reference to a few implementation examples, changes may be made thereto, e.g. in the selection of ingredients for puffed grain coating, without departing from the scope of the annexed claims.

## Claims

1. A process for preparing a rice-based food product comprising the steps of:
a) selecting a raw material from the group consisting of *immature grain, damaged parboiled rice, broken parboiled rice* and mixtures thereof;
b) dry and/or vacuum cooking-toasting the raw material thus selected; and
c) puffing the products so pre-treated.

2. The process according to claim 1, wherein the selecting step a) includes the removal of impurities, clots or excessively fine parts, in order to obtain a raw material which can be, by size and composition, as much homogenous as possible in terms of size and specific weight.

3. The process according to claim 1 or claim 2, wherein the raw material so selected, before being conveyed to step b), is subjected to a ventilating process, which allows to remove the possible powders still present on the raw material.

4. The process according to any one of claims 1 to 3, wherein the dry and/or vacuum cooking-toasting step b) consists of heating the raw material to a temperature of 100 to 140°C.

5. The process according to any one of claims 1 to 4, wherein in the puffing step c) the grains are subjected to a pressure of 8*10⁵ Pa to 14*10⁵ Pa (8-14 bar).

6. The process according to any one of claims 1 to 5, comprising, after the selecting step a), the steps of:
a1) conditioning the selected raw material;
a2) stabilizing the selected and conditioned raw material.

7. The process according to any one of claims 1 to 6, wherein the conditioning step a1) allows to achieve a moisture in the range of 15-18% by steam feeding.

8. The process according to any one of claims 1 to 7, wherein the stabilizing step a2) is carried out by a treatment with a stabilizing agent suitable for preventing the formation of moulds, growth of yeasts, undesired action of enzymes and oxidation of fat content.

9. The process according to claim 8, wherein the stabilizing agents are selected from the group consisting of antimould, antimicrobial and antioxidant agents.

10. The process according to any one of claims 1 to 9, wherein taste modifying agents are added in the stabilizing step, i.e. agents suitable for improving the product palatability.

11. The process according to claim 10, wherein the taste modifying agents are selected from the group consisting of meat extracts, fish extracts, vegetable and herb extracts, monosodium glutamate, protein hydrolyzates in powder or liquid form, simple or essential oils, natural flavourings, sugars and amino acids.

12. The process according to any one of claims 6 to 11, wherein a whitening step a3) is included before the cooking-toasting step b) and after the stabilization step a2).

13. The process according to claim 12, wherein the whitening step is carried out through mechanical means and/or chemical action of a whitening agent.

14. The process according to any one of claims 1 to 13, wherein the puffed grains are subjected to a granulating step c1) after the puffing step.

15. The process according to any one of claims 1 to 14, wherein the puffed grains exiting from step c) or the grains discarded from step c1) are subjected to a milling step c2).

16. The process according to any one of claims 1 to 14, wherein the puffed grains exiting from step c) or the granules exiting from step c1) are submitted to a coating treatment c3) with substances selected from the group consisting of nutrients, food substances or mixtures thereof.

17. A immature grain- and/or damaged parboiled rice- and/or broken parboiled rice-based food product obtainable by the process of the invention according to any one of claims 1 to 5 and any one of claims 14 to 16.

18. A immature grain- and/or damaged parboiled rice- and/or broken parboiled rice-based food product obtainable by the process of the invention as claimed in any one of claims 1 to 16.

19. A use of the food product according to claim 17 in zootechnics.

20. The use of the food product according to claim 18 for human feeding or zootechnics.

21. A immature grain- and/or damaged parboiled rice- and/or broken parboiled rice-based food product according to claim 17 or 18, said food product being selected from the group consisting of brown rice, brown risotto, brown rice soup, brown rice granules, brown rice cream, brown rice semolina, brown rice flour, parboiled rice, parboiled risotto, parboiled rice soup, parboiled rice granules, parboiled rice semolina, parboiled rice cream, parboiled rice flour, hazelnut rice, caramelized rice, cocoa rice, honey rice, sugared rice, complementary puffed rice and sucrose feedstuff, and complete rice-meat-vegetable-based feedstuff.
